# FASCICULE DE BREVET EUROPEEN

(11) **EP 4 332 693 B1**
(45) Date de publication et mention de la délivrance du brevet: **02.04.2025**
(21) Numéro de dépôt: 23184951.4
(22) Date de dépôt: 12.07.2023
(51) Int. Cl.: G04G 17/04, G04G 19/10, G04C 10/02

(54) **MONTRE MUNIE D'UN CAPTEUR DE LUMIÈRE ET D'UNE ANTENNE**
UHR MIT EINEM LICHTSENSOR UND EINER ANTENNE
WATCH PROVIDED WITH A LIGHT SENSOR AND AN ANTENNA

(30) Priorité: 31.08.2022 EP 22193119
(43) Date de publication de la demande: 06.03.2024
(73) Titulaire: The Swatch Group Research and Development Ltd, 2074 Marin (CH)
(72) Inventeur: Born, Jean-Jacques, 1110 Morges (CH); Poli, Gian-Carlo, 2206 Les Geneveys-sur-Coffrane (CH)
(74) Mandataire: ICB SA

(56) Documents cités:
- JP-A- 2019 060 847
- US-A1- 2015 268 639

## Description

### Domaine technique de l'invention

L'invention concerne le domaine des montres munies d'un capteur de lumière, formé d'au moins une cellule photovoltaïque, pour alimenter un dispositif électronique de la montre, et d'une antenne de communication avec au moins un système ou dispositif extérieur à la montre.

En particulier, la montre selon l'invention comprend une boîte incorporant le mouvement horloger et un affichage analogique de l'heure, cette boîte étant formée par un matériau métallique.

### Arrière-plan technologique

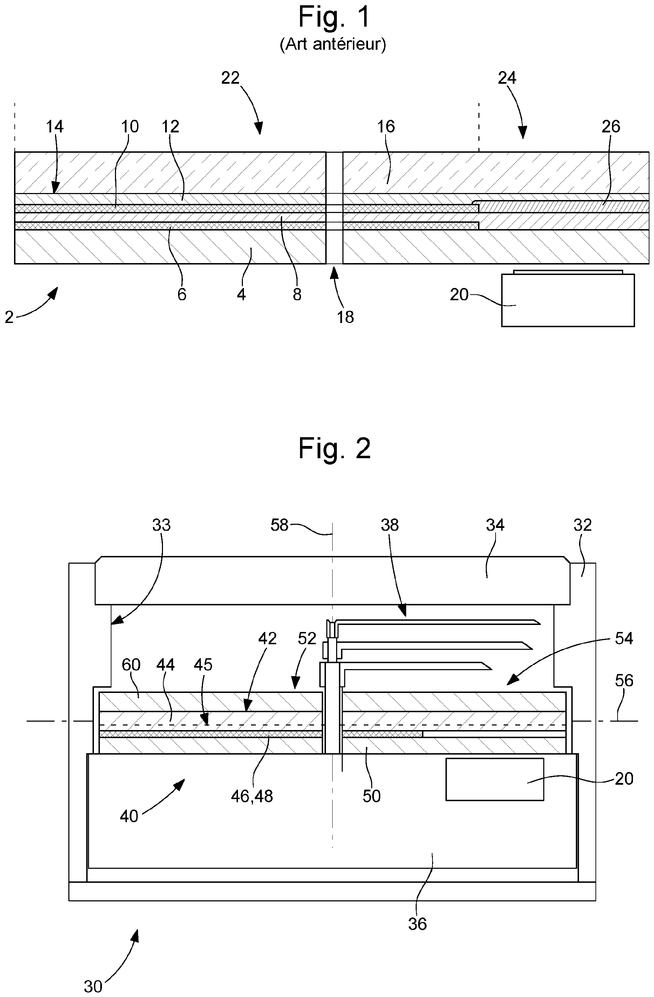

Le document JP 2019/060847 décrit une montre électronique comprenant une boîte présentant une ouverture supérieure, une glace fermant l'ouverture supérieure de la boîte, un mouvement, un affichage analogique entraîné par le mouvement, et un ensemble agencé sur le mouvement et formé par un capteur de lumière (aussi nommé 'capteur solaire') et un cadran supérieur pour l'affichage analogique. Le capteur de lumière est formé d'une pluralité de cellules photovoltaïques. Comme montré à la Figure 1, jointe à la présente description, qui représente une réalisation décrite dans le document JP, l'ensemble 2 comprend un film 4, un capteur de lumière 14 agencé sur ce film, lequel forme donc un support pour le capteur de lumière, et un cadran supérieur 16, distinct du capteur de lumière, qui laisse passer de la lumière pour le capteur de lumière de sorte que ce capteur de lumière est visible pour un utilisateur observant l'ensemble 2 au travers de la glace de la montre. Le cadran supérieur 16 porte notamment une graduation pour l'affichage de l'heure. Les cellules photovoltaïques du capteur de lumière sont formées chacune par l'empilement d'une électrode métallique 6, une couche en matériau semi-conducteur 8, une électrode transparente 10 agencée au-dessus de la couche semi-conducteur et une couche de protection 12. La montre comprend en outre une antenne 20 agencée pour communiquer au travers de la glace de cette montre avec un dispositif de communication extérieur à la montre.

L'ensemble 2 présente une première partie 22, dans laquelle sont agencées les électrodes métalliques et les électrodes transparentes, et une deuxième partie 24 qui est, en projection dans un plan général de l'ensemble (perpendiculaire à l'axe central du trou 18 prévu pour le passage des axes de l'affichage analogique de l'heure), distincte de la première partie 22 et qui recouvre l'antenne 20. La couche en matériau semi-conducteur 8 s'étend dans la première partie 22 et aussi dans la deuxième partie 24 de l'ensemble 2, et cette couche détermine en partie la couleur de l'ensemble 2 pour un utilisateur observant cet ensemble au travers de la glace. En l'absence de l'ajout d'une couche non-conductrice 26, qui est prévue comme solution dans le document japonais décrit ici, la présence d'électrodes transparentes supérieures pose un problème visuel étant donné qu'elle engendre une variation de couleur, en particulier une variation de la teinte due à une variation de réflexion de la lumière, entre la première partie 22 et la deuxième partie 24. Pour résoudre ce problème, il est prévu d'ajouter dans la deuxième partie 24 une couche non conductrice 26 qui est sélectionnée pour ajuster la transmission de la lumière, et ainsi la réflexion à l'interface entre cette couche et la couche de protection 12, de sorte cette transmission corresponde sensiblement à celle de l'électrode transparente 10.

Une telle solution demande le dépôt d'une couche additionnelle et il est difficile, voire quasi impossible, d'obtenir exactement une même teinte pour les deux parties 22 et 24. Ensuite, la ligne de jonction entre la couche additionnelle 26 et les électrodes transparentes supérieures 10 est visible. De plus, comme le capteur de lumière 14 comprend une pluralité de cellules photovoltaïques dont les électrodes transparentes supérieures 10 définissent des secteurs séparés, comme montré aux figures du document JP en question, les zones entre les électrodes transparentes demeurent visibles, de sorte qu'un utilisateur de la montre, observant le cadran, distingue les cellules photovoltaïques du fait d'une différence de teinte entre les électrodes supérieures transparentes 10 et les zones de séparation entre celles-ci qui n'ont pas le matériau conducteur formant les électrodes transparentes. Ainsi, le fait qu'un capteur de lumière est agencé sous le cadran 16 demeure visible dans la réalisation décrite ici. Ce fait engendre toujours un certain problème esthétique, de sorte que la solution envisagée dans le document japonais est partielle et ne résout donc pas entièrement le problème esthétique lié à la présence d'un capteur de lumière sous le cadran. En effet, notamment pour les montres à affichage analogique de l'heure, on apprécie généralement que le cadran présente une couleur uniforme (exceptions faîtes notamment pour des impressions utiles ou décoratives). Une variation de couleur entre deux régions du cadran liée à l'agencement de diverses parties techniques donne souvent un aspect 'bas de gamme' à la montre. De plus, notamment pour des montres classiques, on peut souhaiter masquer au mieux la présence de cellules photovoltaïques.

### Résumé de l'invention

La présente invention a pour but de résoudre le problème esthétique susmentionné pour une montre incorporant un capteur de lumière sous un affichage analogique, lequel est couvert par une glace (nommé aussi un verre), et comprenant une antenne de communication qui doit pouvoir communiquer avec l'extérieur au travers de la glace. Un objectif principal de l'invention est de fournir une telle montre dans laquelle la présence d'au moins une cellule photovoltaïque au niveau du cadran ne peut pas être décelée au travers de la glace par un utilisateur de la montre. L'invention a aussi pour objectif de fournir une montre à l'apparence classique avec un cadran qui apparaît opaque, de teinte relativement foncée.

A cet effet, la présente invention concerne une montre comprenant une boîte présentant une ouverture supérieure, une glace fermant cette ouverture supérieure, un mouvement, un affichage analogique entraîné par le mouvement, un ensemble situé entre le mouvement et l'affichage analogique et comprenant un capteur de lumière, lequel est formé par une plaquette ou couche en matériau semi-conducteur, au moins une électrode négative et au moins une électrode positive. La montre incorpore une antenne agencée pour pouvoir communiquer au travers de la glace avec un dispositif de communication extérieur à la montre. Ledit ensemble présente une première partie, dans laquelle sont agencées entièrement ladite au moins une électrode positive et ladite au moins une électrode négative, et une deuxième partie sans électrodes qui est séparée de la première partie et dont une projection dans un plan général dudit ensemble inclut une projection de l'antenne dans ce plan général. La plaquette ou couche en matériau semi-conducteur s'étend, parallèlement au plan général, dans la première partie et la deuxième partie dudit ensemble. Ladite au moins une électrode négative et ladite au moins une électrode positive sont toutes situées au-dessous de la plaquette ou couche en matériau semi-conducteur.

Ainsi, la plaquette ou couche en matériau semi-conducteur, en particulier en silicium, s'étend dans la première région de l'ensemble susmentionné, où est situé le capteur de lumière photovoltaïque, et dans la deuxième région de cet ensemble qui comprend ou recouvre l'antenne. De plus, toutes les électrodes sont agencées au-dessous de la plaquette ou couche en matériau semi-conducteur. Grâce à cette caractéristique, la première région et la deuxième région de l'ensemble peuvent présenter exactement une même couleur, pour un utilisateur observant l'ensemble au travers de la glace, et ne pas présenter de ligne de jonction ou zone de transition entre ces deux régions. De plus, aucune électrode n'étant agencée sur la plaquette ou couche semi-conductrice, il n'est pas possible de détecter visuellement la présence d'un capteur de lumière et en particulier de discerner la structure d'un tel capteur comprenant plusieurs cellules photovoltaïques. De préférence, la plaquette ou couche en matériau semi-conducteur s'étend dans toute la première partie et la deuxième partie dudit ensemble. Dans une variante avantageuse permettant d'obtenir un cadran entièrement d'une même couleur et présentant un aspect uniforme, la plaquette ou couche en matériau semi-conducteur s'étend dans toute la partie visible de l'ensemble pour un utilisateur observant cet ensemble au travers de la glace. Ensuite, de préférence, la plaquette ou couche en matériau semi-conducteur présente une surface supérieure ayant un traitement spécifique uniforme, notamment une texturation ou micro-structuration. De plus, une ou plusieurs couches additionnelles prévues au-dessus de la plaquette ou couche en matériau semi-conducteur sont avantageusement homogènes et recouvrent l'entier de l'ensemble. Finalement, la surface supérieure de l'ensemble peut présenter, au moins par zones, une finition spécifique et en particulier une même finition sur toute cette surface supérieure. Par 'même couleur' on comprend la couleur / teinte de base du cadran qui est homogène, donc exceptions faîtes notamment pour des impressions utiles ou décoratives, des appliques sur le cadran ou des éléments insérés dans le cadran.

L'invention concerne également un cadran, pour une montre ayant un affichage analogique, comprenant un capteur de lumière qui est formé par une plaquette ou couche en matériau semi-conducteur, au moins une électrode négative et au moins une électrode positive, ce cadran présentant une première partie, dans laquelle sont agencées entièrement ladite au moins une électrode négative et ladite au moins une électrode positive, et une deuxième partie qui est, en projection dans un plan général du cadran, séparée de la première partie et qui est prévue pour le passage de signaux électromagnétiques au travers du cadran. La plaquette ou couche en matériau semi-conducteur s'étend parallèlement audit plan général dans la première partie et la deuxième partie du cadran, ladite au moins une électrode négative et ladite au moins une électrode positive étant toutes situées au-dessous de la plaquette ou couche en matériau semi-conducteur.

Selon un mode de réalisation avantageux, la deuxième partie du cadran comprend l'antenne, laquelle est agencée en-dessous de la plaquette ou couche en matériau semi-conducteur, cette antenne étant déposée de préférence sur une même couche que les électrodes du capteur de lumière.

### Brève description des figures

L'invention sera décrite ci-après de manière plus détaillée à l'aide des dessins annexés, donnés à titre d'exemples nullement limitatifs, dans lesquels :
- la Figure 1, déjà décrite, représente un ensemble, selon l'art antérieur, qui comprend un cadran pour une montre et un capteur de lumière photovoltaïque, ainsi qu'une antenne agencée dans la montre sous l'ensemble représenté ;
- la Figure 2 représente, de manière simplifiée, un premier mode de réalisation d'une montre selon l'invention comprenant un premier ensemble selon l'invention et une antenne, le premier ensemble formant un cadran qui incorpore un capteur de lumière photovoltaïque ;
- la Figure 3 est une vue en coupe d'un deuxième ensemble selon l'invention prévu pour être incorporé dans un deuxième mode de réalisation d'une montre selon l'invention ; et
- la Figure 4 est une vue en coupe d'une variante particulière du deuxième ensemble de la Figure 3, selon un plan de coupe au niveau des électrodes du capteur de lumière photovoltaïque.

### Description détaillée de l'invention

En référence à la Figure 2, on décrira ci-après un premier mode de réalisation d'une montre selon l'invention.

La montre 30 comprend une boîte 32 présentant une ouverture supérieure 33, une glace 34 fermant l'ouverture supérieure, un mouvement 36, un affichage analogique 38 entraîné par le mouvement, et un ensemble 40 qui est situé généralement entre le mouvement et l'affichage analogique et qui forme ici avantageusement lui-même le cadran de la montre associé à l'affichage analogique, aucune plaquette de recouvrement de l'ensemble 40 n'étant prévue entre cet ensemble et l'affichage analogique. L'ensemble 40 comprend un capteur de lumière 42 comportant au moins une cellule photovoltaïque et qui est formé par une plaquette ou couche en matériau semi-conducteur 44 (aussi nommée plaquette ou couche semi-conductrice), au moins une électrode négative 46 et au moins une électrode positive 48 toutes situées au-dessous de la plaquette ou couche semi-conductrice. Dans les variantes de l'invention représentées, l'ensemble comprend ou est fixé à un support 50 (selon que l'on considère ce support comme faisant ou non partie de l'ensemble), notamment par collage. La plaquette ou couche en matériau semi-conducteur 44 est de préférence une plaquette ou couche en silicium (Si).

Dans le premier mode de réalisation, la plaquette ou couche semi-conductrice 44 présente une région inférieure 45 qui est dopée pour former des zones facilitant la conduction de charges électriques vers ladite au moins une électrode négative et ladite au moins une électrode positive auxquelles elles sont associées (une zone dopée négativement, nommée de type n ou N, est reliée à une électrode négative, alors qu'une zone dopée positivement, nommée de type p ou P, est reliée à une électrode positive). Par 'région / zone dopée', on comprend une région / zone présentant une conduction électrique qui n'est pas très faible, voire quasi nulle (comme ceci est généralement le cas pour de faibles dopages n, N ou de faibles dopages p, P). Ainsi, une zone dopée est, selon les notations usuelles dans le domaine des semi-conducteurs, soit une zone N+ ou une zone P+, soit une zone N++ ou une zone P++. Pour clairement indiquer que l'on considère une zone suffisamment dopée pour présenter une conduction électrique significative, on mentionne 'zone dopée conductrice'. Dans le premier mode de réalisation, la plaquette ou couche en matériau semi-conducteur 44 présente des zones dopées conductrices sur toute sa partie inférieure.

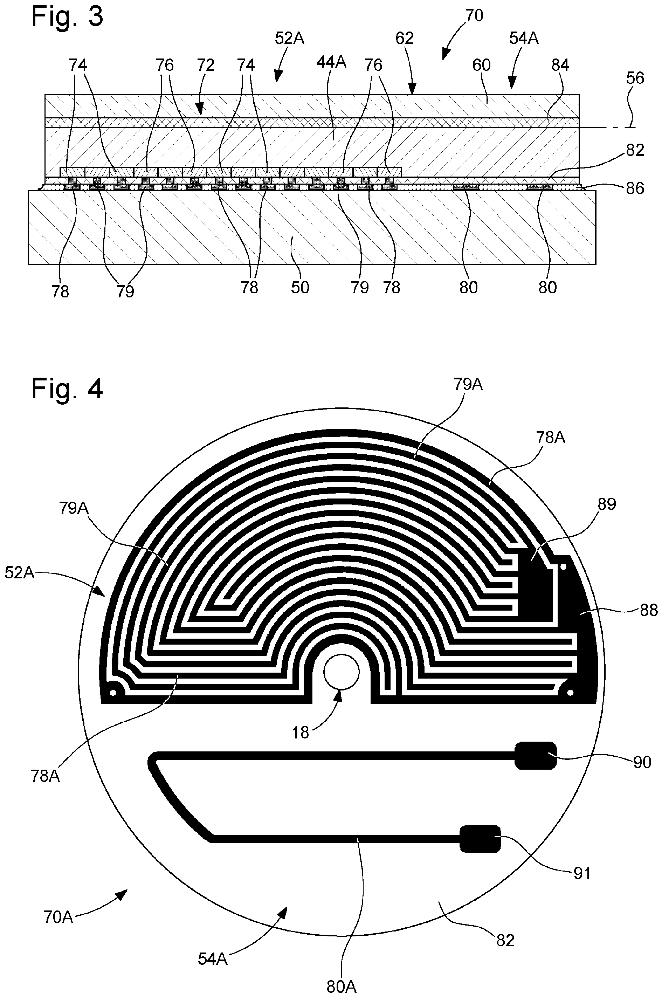

La montre comprend en outre une antenne 20 agencée pour pouvoir communiquer au travers de la glace 34 avec un dispositif de communication (non représenté) qui est extérieur à la montre. L'ensemble 40 présente une première partie 52, dans laquelle sont agencées entièrement ladite au moins une électrode négative 46 et ladite au moins une électrode positive 48 et dans laquelle est donc agencé le capteur de lumière 42, et une deuxième partie 54 sans électrodes qui est séparée de la première partie et dont une projection dans le plan général 56 dudit ensemble (ce plan général étant perpendiculaire à l'axe de rotation 58 des aiguilles formant l'affichage analogique 38) inclut une projection de l'antenne 20 dans ce plan général. Ainsi, le capteur de lumière n'empêche pas l'antenne de communiquer avec un dispositif de communication dont des signaux électromagnétiques entrent dans la montre au travers de la glace 34, car l'antenne et le capteur de lumière sont agencés, en projection dans le plan général de l'ensemble 40, dans des régions séparées. Pour qu'un utilisateur de la montre ne puisse pas distinguer la première partie et la deuxième partie de l'ensemble 40 formant le cadran, la plaquette ou couche en matériau semi-conducteur 44 s'étend, parallèlement au plan général 56, dans la première partie 52 de l'ensemble 40, pour former le capteur de lumière 42, et également dans la deuxième partie 54 de cet ensemble. De plus, selon l'invention, toutes les électrodes du capteur de lumière sont situées au-dessous de la plaquette ou couche semi-conductrice 44. Ainsi, comme on peut le remarquer à la Figure 2 (et aussi à la Figure 3 concernant le deuxième mode de réalisation), l'agencement du capteur de lumière 42 n'engendre aucun traitement particulier de la surface supérieure de la plaquette ou couche en matériau semi-conducteur 44 et aucun dépôt de matière sur cette surface supérieure, laquelle est uniforme et présente un aspect opaque homogène pour un observateur. Cet observateur ne peut ainsi pas distinguer la présence du capteur de lumière par la présence d'une couche supérieure structurée, notamment d'électrodes supérieures transparentes, comme dans l'art antérieur.

La plaquette ou couche semi-conductrice s'étend continument de la première partie 52 à la deuxième partie 54 et elle forme une seule et même plaquette ou couche semi-conductrice qui s'étend au moins partiellement dans ces première et deuxième parties ou, de préférence, sur l'entier de la région de l'ensemble 40 qui est visible pour un utilisateur de la montre observant cet ensemble, formant un cadran, au travers de la glace 34. Cette dernière variante préférée permet d'obtenir un cadran à la teinte homogène et présentant un même aspect uniforme pour l'utilisateur observant cet ensemble au travers de la glace. En particulier, la plaquette ou couche en matériau semi-conducteur s'étend dans toute la première partie 52 et la deuxième partie 54 de l'ensemble 40, c'est-à-dire dans toute la région du capteur de lumière 42 et toute la région superposée à l'antenne 20.

Selon une variante avantageuse, l'ensemble 40 comprend en outre au moins une couche 60 qui est transparente, semi-transparente ou translucide et qui est agencée au-dessus de la plaquette ou couche semi-conductrice 44. De préférence, la couche 60 est homogène et s'étend sur toute la partie visible de l'ensemble 40, formant le cadran de la montre 30, pour un utilisateur observant cet ensemble au travers de la glace 34. En particulier, cette couche 60 forme une couche supérieure de l'ensemble 40 et présente une surface supérieure qui est uniforme, au moins dans la région visible pour un utilisateur observant cet ensemble au travers de la glace. En particulier, la couche 60 est agencée de manière à recouvrir entièrement la plaquette ou couche semi-conductrice. Ainsi, cette couche 60 n'altère pas la parfaite homogénéité de couleur et l'uniformité d'aspect de l'ensemble 40 formant ici le cadran de la montre. La couche 60 est avantageusement transparente, éventuellement avec une légère coloration, et elle détermine, conjointement avec la plaquette ou couche semi-conductrice et des couches éventuelles déposées sur cette dernière, la couleur de la première partie 52 et de la deuxième partie 54 de l'ensemble 40 pour un utilisateur observant cet ensemble au travers de la glace 34, de préférence de l'entier de la région de cet ensemble visible par cet utilisateur. La couche transparente, semi-transparente ou translucide 60 rend plus foncée la couleur de la plaquette ou couche semi-conductrice, en particulier elle donne à l'ensemble 40 une couleur anthracite, bleu nuit ou noire pour un utilisateur observant l'ensemble au travers de la glace. Ainsi, la couche 60 fonce la couleur de l'ensemble 40 et lui procure une couleur profonde du plus bel effet.

De plus, la couche supérieure 60 détermine l'état de la surface supérieure de l'ensemble 40. En effet, la surface supérieure de la couche transparente, semi-transparente ou translucide 60 peut présenter une finition donnant, au moins par zones, un aspect mat, brossé, satiné ou brillant à l'ensemble. Dans une variante, cette surface supérieure présente un brossage linéaire ou radiale intégral. En particulier, la couche supérieure 60 de l'ensemble 40 est une couche de vernis transparent qui est appliquée sur la plaquette ou couche semi-conductrice 44. De plus, l'ensemble 40 peut comprendre au moins une couche additionnelle au-dessus de la plaquette ou couche semi-conductrice. Une telle couche additionnelle peut être un film formant un filtre, une couche antireflet ou une couche de diffusion de la lumière en transmission.

Dans une variante particulière appropriée à l'agencement de l'antenne dans la montre selon l'invention, la boîte 32 est formée au moins en majeure partie par un ou plusieurs matériau(x) métallique(s). Dans une variante classique, les parties externes de la boîte 32 sont entièrement métalliques.

En référence aux Figures 3 et 4, on décrira ci-après un deuxième mode de réalisation d'un ensemble formant cadran selon l'invention. Certains éléments déjà décrits en détails ci-avant et des variantes envisageables ne seront pas à nouveau décrits pour le deuxième mode de réalisation, la description portant en premier lieu sur les différences et particularités de ce deuxième mode de réalisation.

Comme dans le premier mode de réalisation, ce deuxième mode de réalisation se caractérise avantageusement par le fait que les électrodes positives et les électrodes négatives sont agencées sous la plaquette ou couche en matériau semi-conducteur 44A. Ce deuxième mode de réalisation se distingue essentiellement du premier mode de réalisation par le fait que l'antenne est comprise dans l'ensemble ou supportée par ce dernier.

A la Figure 3 est représenté un ensemble 70 selon l'invention qui forme un cadran pour une montre à affichage analogique et qui comprend un capteur de lumière 72 formé d'au moins une cellule photovoltaïque. De manière générale, le capteur de lumière 72 est formé par une plaquette ou couche en matériau semi-conducteur 44A, des électrodes négatives 78 et des électrodes positives 79. L'ensemble 70 présente une première partie 52A, dans laquelle sont agencées entièrement les électrodes négatives et les électrodes positives, et une deuxième partie 54A qui est, en projection dans un plan général 56 de l'ensemble, séparée de la première partie. La deuxième partie est prévue pour le passage de signaux électromagnétiques provenant d'un dispositif de communication ou engendrés par l'antenne 80. La plaquette ou couche en matériau semi-conducteur 44A (la plaquette ou couche semi-conductrice) s'étend, parallèlement audit plan général, dans la première partie 52A et la deuxième partie 54A de l'ensemble 70 qui est un cadran. La deuxième partie 54A de l'ensemble 70 comprend ou supporte, d'un côté inférieur de cet ensemble, une antenne 80. Pour éviter de nuire au bon fonctionnement de l'antenne 80, la plaquette ou couche en matériau semi-conducteur 44A ne présente pas ici de zones dopées conductrices dans la deuxième partie dudit ensemble. On notera que la plaquette ou couche en matériau semi-conducteur 44A peut être faiblement dopée en partie ou totalement dans la deuxième partie 54A de l'ensemble 70.

L'antenne 80 est située en-dessous de la plaquette ou couche en matériau semi-conducteur, de sorte à être invisible du côté de la surface supérieure 62 de l'ensemble, laquelle est la surface visible du cadran formé par cet ensemble 70 une fois ce dernier incorporé dans une boîte de montre pour former une montre selon l'invention.

Dans la variante avantageuse représentée à la Figure 3, la deuxième partie 54A de l'ensemble 70 comprend l'antenne 80, laquelle est agencée en-dessous de la plaquette ou couche semi-conductrice 44A. En particulier, l'antenne 80 est déposée sur une même couche 82 que les électrodes 78 et 79 du capteur de lumière. La couche inférieure 82 est une couche de passivation utile au capteur de lumière 72. Dans la variante représentée à la Figure 3, il y a une pluralité d'électrodes négatives 78 et une pluralité d'électrodes positives 79 agencées en alternance, chaque électrode positive étant agencée entre deux électrodes négatives. La pluralité d'électrodes négatives 78 et la pluralité d'électrodes positives 79 sont toutes déposées inférieurement sur la couche de passivation 82, qui recouvre inférieurement la plaquette ou couche semi-conductrices 44A, et sont reliées par des ouvertures prévues dans la couche de passivation 82 respectivement à une pluralité de zones inférieures 74 dopées N+ et à une pluralité de zones inférieures 76 dopées P+, ces zones dopées 74, 76 étant donc conductrices. Dans une variante particulière, l'antenne 80 est formée par un même matériau que les électrodes négatives et les électrode positives.

De manière usuelle, la plaquette ou couche semi-conductrice est dopée conductrice dans diverses régions de la première partie de l'ensemble. Par contre, la plaquette ou couche semi-conductrice n'est ici pas dopée conductrice dans la deuxième partie 54A de l'ensemble. Comme indiqué précédemment, 'dopée conductrice' indique 'dopée de manière à présenter une conduction électrique significative' et par conséquent 'non dopée conductrice' signifie 'non dopée de manière à présenter une conduction électrique significative' ou de manière équivalente 'sans dopage ou dopée de manière à présenter une conduction électrique non significative, c'est-à-dire très faible'. Ainsi, dans la deuxième région de l'ensemble, la plaquette ou couche semi-conductrice 44 peut, dans une variante, être faiblement dopée (c'est-à-dire dopée n, N ou dopée p, P selon la terminologie usuelle). Ce qui importe, c'est que la plaquette ou couche semi-conductrice n'engendre pas un écran magnétique pour l'antenne par un dopage. En d'autres termes, on évite de perturber de manière significative une transmission de signaux électromagnétiques entre l'antenne et un dispositif de communication extérieur situé du côté de la surface supérieure de l'ensemble 70 et avec lequel il est prévu qu'une montre, incorporant cet ensemble, puisse communiquer au travers de la glace supérieure de la montre, ou d'engendrer une augmentation importante de l'intensité de tels signaux pour assurer une communication correcte.

Dans une variante principale, la plaquette ou couche en matériau semi-conducteur 44A s'étend dans toute la première partie 52A et toute la deuxième partie 54A de l'ensemble 70.

Dans une variante préférée, la plaquette ou couche en matériau semi-conducteur s'étend en projection sur toute la surface supérieure 62 de l'ensemble 70.

De préférence, la plaquette ou couche en matériau semi-conducteur présente une texturation (micro-structuration) sur toute sa surface supérieure et au moins une couche antireflet 84 est déposée sur la plaquette ou couche en matériau semi-conducteur, de manière à la couvrir en entier. La couche antireflet est déposée uniformément sur la plaquette ou couche en matériau semi-conducteur. L'ensemble 70 peut comprendre en outre une couche de diffusion de la lumière. De préférence, toutes les couches déposées au-dessus de la plaquette ou couche semi-conductrice 44A sont déposées de manière uniforme sur l'entier de cette plaquette ou couche semi-conductrice. On obtient un ensemble 70 présentant du côté de sa surface supérieure 62 une couleur parfaitement homogène et un aspect parfaitement uniforme. Toutefois, à des fins esthétiques ou pour que le cadran présente un motif donné, autre que celui d'une cellule photovoltaïque ou d'une antenne, par exemple un logo, le traitement d'au moins une couche supérieure peut ne pas être uniforme, mais différencié à dessein.

L'ensemble 70 comprend encore, comme dans le premier mode de réalisation, une couche supérieure 60 qui est transparente ou translucide et qui détermine, conjointement avec la plaquette ou couche en matériau semi-conducteur et la couche antireflet 84, la couleur desdites première et deuxième parties de l'ensemble du côté de la surface supérieure 62 de l'ensemble. De plus, elle détermine l'état de cette surface supérieure. De préférence, la couche supérieure 60 est transparente et recouvre uniformément l'entier de la surface supérieure 62 de l'ensemble 70.

Finalement, l'ensemble 70 est collé sur un support 50 au moyen d'une couche de colle 86. Comme déjà indiqué, on peut considérer que ce support 50 fait partie de l'ensemble 70, ou non. Avec le support 50, l'ensemble définit un module qui forme un cadran solaire, c'est-à-dire muni d'au moins une cellule photovoltaïque, et qui de plus incorpore une antenne.

La Figure 4 montre en coupe un ensemble 70A qui est une variante du deuxième mode de réalisation. La coupe est parallèle au plan général de l'ensemble 70A au niveau des électrodes de son capteur de lumière. Si on considère le support 50 et la couche de colle 86 non inclus dans l'ensemble ou dans le cas où un tel support n'est pas prévu, alors la Figure 4 est une vue de dessous de l'ensemble. Cette variante est particulière par l'agencement de la pluralité d'électrodes négatives 78A et de la pluralité d'électrodes positive 79A, cet agencement permettant d'occuper de manière optimisée une partie en demi-cercle ou une partie en cercle tronqué d'un disque présentant un trou 18 en son centre pour le passage des axes d'un affichage analogique. L'agencement particulier des électrodes négatives et positives, imbriquées les unes dans les autres, permet en outre d'avoir la plage de contact négative 88, à laquelle sont reliées les électrodes négatives 78A, et la plage de contact positive 89, à laquelle sont reliées les électrodes positives 79A, l'une à côté de l'autre dans une même zone radiale de l'ensemble 70A, et d'avoir ainsi deux plages de contact adjacentes qui sont proches l'une de l'autre, ce qui facilite la liaison électrique à un connecteur électrique prévu pour le capteur de lumière.

La pluralité d'électrodes négatives 78A et de la pluralité d'électrodes positive 79A, les deux plages de contact 88 et 89 et l'antenne 80A sont déposées inférieurement sur la couche de passivation 82 décrite précédemment. La question qui consiste à savoir s'il s'agit d'une pluralité d'électrodes négatives et d'une pluralité d'électrodes positives ou d'une seule électrode négative et d'une seule électrode positive ayant chacune une pluralité de bras allongés, étant donné que tous les bras d'une même polarité sont reliés à une même plage de contact est une question de définition qui n'a pas de conséquence pour la présente invention.

L'antenne 80A est prévue pour une communication à haute fréquence, cette antenne étant formée par une seule piste en U dont les deux extrémités sont reliées respectivement à deux plages de contact 90 et 91 qui sont également déposées sur la couche de passivation 82, laquelle définit en particulier un miroir arrière pour le capteur de lumière. La couche de passivation s'étend sur l'entier de la plaquette ou couche semi-conductrice, laquelle s'étend, en projection dans le plan général de l'ensemble 70A, sur tout cet ensemble. Le capteur de lumière occupe une première partie 52A de l'ensemble et l'antenne occupe une deuxième partie 54A de cet ensemble, distincte de la première partie, ces deux parties constituant l'entier de l'ensemble 70A. Ainsi, par 'séparé', on comprend aussi un cas où les deux parties sont contigües.

Dans une autre variante non représentée, la deuxième partie de l'ensemble supporte l'antenne (un module formant cette antenne) d'un côté inférieur de cet ensemble, cette antenne étant fixée à l'ensemble par exemple par collage.

Finalement, on notera que la première partie et la deuxième partie peuvent présenter des formes différentes et que les électrodes peuvent être agencées différemment. Par exemple, le capteur de lumière peut être annulaire avec l'antenne agencée au centre. Dans ce cas, la première partie de l'ensemble forme une structure annulaire et la deuxième partie de cet ensemble forme un disque central avec un trou circulaire en son centre. Dans une autre variante, la deuxième partie peut consister en une portion sensiblement rectangulaire ou carrée qui s'étend radialement depuis le pourtour de l'ensemble formant le cadran, la première partie de l'ensemble formant la partie complémentaire à cette portion radiale.

## Revendications

1. Montre (30) comprenant une boîte (32) présentant une ouverture supérieure (33), une glace (34) fermant cette ouverture supérieure, un mouvement (36), un affichage analogique (38) entraîné par le mouvement, un ensemble (40 ; 70, 70A) situé entre le mouvement et l'affichage analogique et comprenant un capteur de lumière (42 ; 72) qui est formé par une plaquette ou couche en matériau semi-conducteur (44 ; 44A), au moins une électrode négative (46 ; 78, 78A) et au moins une électrode positive (48 ; 79, 79A) ; la montre comprenant une antenne (20 ; 80, 80A) agencée pour pouvoir communiquer au travers de la glace avec un dispositif de communication extérieur à la montre ; ledit ensemble présentant une première partie (52 ; 52A), dans laquelle sont agencées entièrement ladite au moins une électrode positive et ladite au moins une électrode négative, et une deuxième partie (54 ; 54A) sans électrode qui est séparée de la première partie et dont une projection dans un plan général (56) dudit ensemble inclut une projection de l'antenne dans ce plan général ; la plaquette ou couche en matériau semi-conducteur (44 ; 44A) s'étendant, parallèlement au plan général, dans la première partie et la deuxième partie dudit ensemble ; **caractérisée en ce que** ladite au moins une électrode négative (46 ; 78, 78A) et ladite au moins une électrode positive (48 ; 79, 79A) sont toutes situées au-dessous de la plaquette ou couche en matériau semi-conducteur (44 ; 44A).

2. Montre selon la revendication 1, **caractérisée en ce que** la plaquette ou couche en matériau semi-conducteur (44A) ne présente pas de zones dopées conductrices dans la deuxième partie (54A) dudit ensemble.

3. Montre selon la revendication 1 ou 2, **caractérisée en ce que** la plaquette ou couche en matériau semi-conducteur (44 ; 44A) s'étend dans toute la première partie et la deuxième partie dudit ensemble.

4. Montre selon la revendication 1 ou 2, **caractérisée en ce que** la plaquette ou couche en matériau semi-conducteur (44 ; 44A) s'étend dans toute la partie visible dudit ensemble pour un utilisateur observant cet ensemble au travers de la glace (34).

5. Montre selon une quelconque des revendications 1 à 3, **caractérisée en ce que** la plaquette ou couche en matériau semi-conducteur présente une texturation sur toute sa surface supérieure ; et **en ce qu'**une couche antireflet (84) est déposée au-dessus de cette surface supérieure.

6. Montre selon une quelconque des revendications 1 à 4, **caractérisée en ce que** ledit ensemble (40 ; 70) comprend une couche transparente, semi-transparente ou translucide (60) qui est agencée au-dessus de la plaquette ou couche en matériau semi-conducteur, qui forme une couche supérieure de l'ensemble et qui fonce la couleur de cet ensemble, lui donnant en particulier une couleur anthracite, bleu nuit ou quasi noire.

7. Montre selon la revendication 6, **caractérisée en ce que** la surface supérieure de la couche transparente, semi-transparente ou translucide présente une finition donnant, au moins par zones, un aspect mat, brossé, satiné ou brillant audit ensemble.

8. Montre selon une quelconque des revendications 1 à 7, **caractérisée en ce que** ledit ensemble forme lui-même un cadran pour l'affichage analogique, aucune plaquette de recouvrement dudit ensemble n'étant prévue entre cet ensemble et l'affichage analogique.

9. Montre selon une quelconque des revendications 1 à 8, **caractérisée en ce que** l'antenne est supportée par ledit ensemble d'un côté inférieur de cet ensemble.

10. Montre selon une quelconque des revendications 1 à 8, **caractérisée en ce que** l'antenne (80, 80A) est déposée, d'un côté inférieur de la plaquette ou couche en matériau semi-conducteur (44 ; 44A), sur une même couche que ladite au moins une électrode positive et ladite au moins une électrode négative.

11. Montre selon une quelconque des revendications 1 à 10, **caractérisée en ce que** ladite boîte (32) est formée au moins en majeure partie par un ou plusieurs matériau(x) métallique(s).

12. Cadran (40 ; 70, 70A), pour une montre ayant un affichage analogique, comprenant un capteur de lumière (42 ; 72) qui est formé par une plaquette ou couche en matériau semi-conducteur (44 ; 44A), au moins une électrode négative (46 ; 78, 78A) et au moins une électrode positive (48 ; 79, 79A), ce cadran présentant une première partie (52 ; 52A), dans laquelle sont agencées entièrement ladite au moins une électrode négative et ladite au moins une électrode positive, et une deuxième partie (54, 54A) qui est, en projection dans un plan général (56) du cadran, séparée de la première partie et qui est prévue pour le passage de signaux électromagnétiques au travers du cadran, la plaquette ou couche en matériau semi-conducteur s'étendant parallèlement audit plan général dans la première partie et la deuxième partie du cadran, **caractérisé en ce que** ladite au moins une électrode négative et ladite au moins une électrode positive sont toutes situées au-dessous de la plaquette ou couche en matériau semi-conducteur.

13. Cadran (70, 70A) selon la revendication 12, **caractérisé en ce que** la plaquette ou couche en matériau semi-conducteur (44A) ne présente pas de zones dopées conductrices dans la deuxième partie (54A) du cadran.

14. Cadran selon la revendication 12, **caractérisé en ce que** la deuxième partie (54A) du cadran comprend une antenne (80, 80A), laquelle est agencée en-dessous de la plaquette ou couche en matériau semi-conducteur (44A).

15. Cadran selon la revendication 14, **caractérisé en ce que** l'antenne (80, 80A) est déposée sur une même couche (82) que ladite au moins une électrode négative (78, 78A) et ladite au moins une électrode positive (79, 79A).

16. Cadran selon la revendication 15, **caractérisé en ce que** l'antenne est formée par un même matériau que ladite au moins une électrode négative (78, 78A) et ladite au moins une électrode positive (79, 79A).

17. Cadran selon une quelconque des revendications 12 à 16, **caractérisé en ce que** la plaquette ou couche en matériau semi-conducteur (44A) s'étend dans ledit plan général sur tout le cadran.

18. Cadran selon une quelconque des revendications 12 à 17, **caractérisée en ce que** la plaquette ou couche en matériau semi-conducteur présente une texturation sur toute sa surface supérieure.

19. Cadran selon une quelconque des revendications 12 à 18, **caractérisée en ce qu'**une couche antireflet (84) est déposée uniformément sur la plaquette ou couche en matériau semi-conducteur (44A).

20. Cadran selon une quelconque des revendications 12 à 19, **caractérisé en ce qu'**il comprend au moins une couche transparente, semi-transparente ou translucide (60) qui est agencée au-dessus de la plaquette ou couche en matériau semi-conducteur (44A) de manière à la couvrir entièrement, et qui rend foncée la couleur du cadran, en particulier anthracite, bleu nuit ou quasi noire.

21. Cadran selon la revendication 20, **caractérisé en ce qu'**une surface supérieure (62) de la couche transparente, semi-transparente ou translucide (60) présente une finition donnant, au moins par zones, un aspect mat, brossé, satiné ou brillant au cadran.

## Patentansprüche

1. Uhr (30), die ein Gehäuse (32) umfasst, das eine obere Öffnung (33), ein Glas (34), das die obere Öffnung verschließt, ein Uhrwerk (36), eine analoge Anzeige (38), die von dem Uhrwerk angetrieben wird, eine Baugruppe (40; 70, 70A), die sich zwischen dem Uhrwerk und der analogen Anzeige befindet, und einen Lichtsensor (42; 72) umfasst, der durch ein Plättchen oder eine Schicht aus Halbleitermaterial (44; 44A) gebildet wird, mindestens eine negative Elektrode (46; 78, 78A) und mindestens eine positive Elektrode (48; 79, 79A) aufweist; wobei die Uhr eine Antenne (20; 80, 80A) umfasst, die angeordnet ist, um durch das Glas hindurch mit einer außerhalb der Uhr gelegenen Kommunikationsvorrichtung kommunizieren zu können; wobei die Baugruppe einen ersten Teil (52; 52A) aufweist, in dem die mindestens eine positive Elektrode und die mindestens eine negative Elektrode vollständig angeordnet sind, und einen zweiten Teil (54; 54A) ohne Elektrode, der vom ersten Teil getrennt ist, und von dem eine Projektion in eine allgemeine Ebene (56) der Baugruppe eine Projektion der Antenne in diese allgemeine Ebene beinhaltet; wobei sich das Plättchen oder die Schicht aus Halbleitermaterial (44; 54A) parallel zur allgemeinen Ebene in den ersten Teil und den zweiten Teil der Baugruppe erstreckt; **dadurch gekennzeichnet, dass** sich die mindestens eine negative Elektrode (46; 78, 78A) und die mindestens eine positive Elektrode (48; 79, 79A) alle unterhalb des Plättchens oder der Schicht aus Halbleitermaterial (44; 44A) befinden.

2. Uhr nach Anspruch 1, **dadurch gekennzeichnet, dass** das Plättchen oder die Schicht aus Halbleitermaterial (44A) keine leitfähigen dotierten Bereiche im zweiten Teil (54A) der Baugruppe aufweist.

3. Uhr nach Anspruch 1 oder 2, **dadurch gekennzeichnet, dass** sich das Plättchen oder die Schicht aus Halbleitermaterial (44; 44A) durch den gesamten ersten Teil und den zweiten Teil der Baugruppe erstreckt.

4. Uhr nach Anspruch 1 oder 2, **dadurch gekennzeichnet, dass** sich das Plättchen oder die Schicht aus Halbleitermaterial (44; 44A) durch den gesamten für einen Benutzer sichtbaren Teil der Baugruppe erstreckt, der diese Baugruppe durch das Glas (34) hindurch betrachtet.

5. Uhr nach einem der Ansprüche 1 bis 3, **dadurch gekennzeichnet, dass** das Plättchen oder die Schicht aus Halbleitermaterial auf seiner/ihrer gesamten oberen Oberfläche eine Texturierung aufweist; und dadurch, dass über dieser oberen Oberfläche eine Antireflexschicht (84) aufgebracht ist.

6. Uhr nach einem der Ansprüche 1 bis 4, **dadurch gekennzeichnet, dass** die Baugruppe (40; 70) eine transparente, halbtransparente oder durchscheinende Schicht (60) umfasst, die über dem Plättchen oder der Schicht aus Halbleitermaterial angeordnet ist, die eine obere Schicht der Baugruppe bildet und welche die Farbe dieser Baugruppe dunkler macht, ihr insbesondere eine anthrazitfarbene, nachtblaue oder nahezu schwarze Farbe verleiht.

7. Uhr nach Anspruch 6, **dadurch gekennzeichnet, dass** die obere Oberfläche der transparenten, halbtransparenten oder durchscheinenden Schicht eine Endverarbeitung aufweist, die der Gesamtheit zumindest bereichsweise ein mattes, gebürstetes, satiniertes oder glänzendes Aussehen verleiht.

8. Uhr nach einem der Ansprüche 1 bis 7, **dadurch gekennzeichnet, dass** die Baugruppe selbst ein Zifferblatt für die analoge Anzeige bildet, wobei zwischen dieser Baugruppe und der analogen Anzeige kein Überdeckungsplättchen der Baugruppe vorgesehen ist.

9. Uhr nach einem der Ansprüche 1 bis 8, **dadurch gekennzeichnet, dass** die Antenne von der Baugruppe an einer unteren Seite dieser Baugruppe getragen wird.

10. Uhr nach einem der Ansprüche 1 bis 8, **dadurch gekennzeichnet, dass** die Antenne (80, 80A) an einer unteren Seite des Plättchens oder der Schicht aus Halbleitermaterial (44; 44A) auf einer gleichen Schicht wie die mindestens eine positive Elektrode und die mindestens eine negative Elektrode aufgebracht ist.

11. Uhr nach einem der Ansprüche 1 bis 10, **dadurch gekennzeichnet, dass** das Gehäuse (32) zumindest größtenteils aus einem oder mehreren metallischen Werkstoff(en) gebildet ist.

12. Zifferblatt (40; 70, 70A) für eine Uhr, die eine analoge Anzeige aufweist, die einen Lichtsensor (42; 72), der durch ein Plättchen oder eine Schicht aus Halbleitermaterial (44; 44A) gebildet ist, mindestens eine negative Elektrode (46; 78, 78A) und mindestens eine positive Elektrode (48; 79, 79A) umfasst, wobei dieses Zifferblatt einen ersten Teil (52; 52A) aufweist, in dem die mindestens eine negative Elektrode und die mindestens eine positive Elektrode vollständig angeordnet sind, und einen zweiten Teil (54, 54A), der in der Projektion in eine allgemeine Ebene (56) des Zifferblatts von dem ersten Teil getrennt ist, und der für den Durchgang von elektromagnetischen Signalen durch das Zifferblatt hindurch vorgesehen ist, wobei sich das Plättchen oder die Schicht aus Halbleitermaterial parallel zur allgemeinen Ebene in dem ersten Teil und dem zweiten Teil des Zifferblatts erstreckt, **dadurch gekennzeichnet, dass** sich die mindestens eine negative Elektrode und die mindestens eine positive Elektrode alle unterhalb des Plättchens oder der Schicht aus Halbleitermaterial befinden.

13. Zifferblatt (70, 70A) nach Anspruch 12, **dadurch gekennzeichnet, dass** das Plättchen oder die Schicht aus Halbleitermaterial (44A) keine leitfähigen dotierten Bereiche im zweiten Teil (54A) des Zifferblatts aufweist.

14. Zifferblatt nach Anspruch 12, **dadurch gekennzeichnet, dass** der zweite Teil (54A) des Zifferblatts eine Antenne (80, 80A) umfasst, die unterhalb des Plättchens oder der Schicht aus Halbleitermaterial (44A) angeordnet ist.

15. Zifferblatt nach Anspruch 14, **dadurch gekennzeichnet, dass** die Antenne (80, 80A) auf einer gleichen Schicht (82) wie die mindestens eine negative Elektrode (78, 78A) und die mindestens eine positive Elektrode (79, 79A) aufgebracht ist.

16. Zifferblatt nach Anspruch 15, **dadurch gekennzeichnet, dass** die Antenne aus einem gleichen Werkstoff wie die mindestens eine negative Elektrode (78, 78A) und die mindestens eine positive Elektrode (79, 79A) gebildet ist.

17. Zifferblatt nach einem der Ansprüche 12 bis 16, **dadurch gekennzeichnet, dass** sich das Plättchen oder die Schicht aus Halbleitermaterial (44A) in der allgemeinen Ebene über das gesamte Zifferblatt erstreckt.

18. Zifferblatt nach einem der Ansprüche 12 bis 17, **dadurch gekennzeichnet, dass** das Plättchen oder die Schicht aus Halbleitermaterial auf seiner/ihrer gesamten oberen Oberfläche eine Texturierung aufweist.

19. Zifferblatt nach einem der Ansprüche 12 bis 18, **dadurch gekennzeichnet, dass** eine Antireflexschicht (84) gleichmäßig auf dem Plättchen oder der Schicht aus Halbleitermaterial (44A) aufgebracht ist.

20. Zifferblatt nach einem der Ansprüche 12 bis 19, **dadurch gekennzeichnet, dass** es mindestens eine transparente, halbtransparente oder durchscheinende Schicht (60) umfasst, die über dem Plättchen oder der Schicht aus Halbleitermaterial (44A) angeordnet ist, um es/sie vollständig zu bedecken, und welche die Farbe des Zifferblatts dunkel, insbesondere anthrazit, nachtblau oder nahezu schwarz macht.

21. Zifferblatt nach Anspruch 20, **dadurch gekennzeichnet, dass** eine obere Oberfläche (62) der transparenten, halbtransparenten oder durchscheinenden Schicht (60) eine Endverarbeitung aufweist, die dem Zifferblatt zumindest bereichsweise ein mattes, gebürstetes, satiniertes oder glänzendes Aussehen verleiht.

## Claims

1. Watch (30) comprising a case (32) having a top opening (33), a crystal (34) closing this top opening, a movement (36), an analog display (38) driven by the movement, an assembly (40; 70, 70A) located between the movement and the analog display and comprising a light sensor (42; 72) which is formed by a semiconductor material wafer or layer (44; 44A), at least one negative electrode (46; 78, 78A) and at least one positive electrode (48; 79, 79A); the watch comprising an antenna (20; 80, 80A) arranged to be able to communicate through the crystal with a communication device external to the watch; said assembly having a first portion (52; 52A), in which are arranged entirely said at least one positive electrode and said at least one negative electrode, and a second portion (54; 54A) without electrode which is separated from the first portion and a projection of which in a general plane (56) of said assembly includes a projection of the antenna in this general plane; the semiconductor material wafer or layer (44; 44A) extending, parallel to the general plane, into the first portion and the second portion of said assembly; **characterised in that** said at least one negative electrode (46; 78, 78A) and said at least one positive electrode (48; 79, 79A) are all located below the semiconductor material wafer or layer (44; 44A).

2. Watch according to claim 1, **characterised in that** the semiconductor material wafer or layer (44A) has no conductive doped areas in the second portion (54A) of said assembly.

3. Watch according to claim 1 or 2, **characterised in that** the semiconductor material wafer or layer (44; 44A) extends throughout the first portion and the second portion of said assembly.

4. Watch according to claim 1 or 2, **characterised in that** the semiconductor material wafer or layer (44; 44A) extends throughout the visible portion of said assembly for a user observing said assembly through the crystal (34).

5. Watch according to any one of claims 1 to 3, **characterised in that** the semiconductor material wafer or layer is textured over its entire upper surface; and **in that** an anti-reflective layer (84) is deposited above this upper surface.

6. Watch according to any one of claims 1 to 4, **characterised in that** said assembly (40; 70) comprises a transparent, semi-transparent or translucent layer (60) which is arranged above the semiconductor material wafer or layer, which forms an upper layer of the assembly and which darkens the colour of this assembly, giving it in particular an anthracite, midnight blue or near-black colour.

7. Watch according to claim 6, **characterised in that** the upper surface of the transparent, semi-transparent or translucent layer has a finish giving, at least in some areas, a matt, brushed, satin or glossy appearance to said assembly.

8. Watch according to any one of claims 1 to 7, **characterised in that** said assembly itself forms a dial for the analog display, no cover plate of said assembly being provided between the assembly and the analog display.

9. Watch according to any one of claims 1 to 8, **characterised in that** the antenna is supported by said assembly on a lower side of this assembly.

10. Watch according to any one of claims 1 to 8, **characterised in that** the antenna (80, 80A) is deposited, on a lower side of the semiconductor material wafer or layer (44; 44A), on a same layer as said at least one positive electrode and said at least one negative electrode.

11. Watch according to any one of claims 1 to 10, **characterised in that** said case (32) is formed at least for the most part by one or more metallic materials.

12. Dial (40; 70, 70A), for a watch having an analog display, comprising a light sensor (42; 72) which is formed by a semiconductor material wafer or layer (44; 44A), at least one negative electrode (46; 78, 78A) and at least one positive electrode (48; 79, 79A), this dial has a first portion (52; 52A), in which said at least one negative electrode and said at least one positive electrode are arranged in their entirety, and a second portion (54, 54A) which is, in projection in a general plane (56) of the dial, separated from the first portion and which is provided for the passage of electromagnetic signals through the dial, the semiconductor material wafer or layer extending parallel to said general plane in the first portion and the second portion of the dial, **characterised in that** said at least one negative electrode and said at least one positive electrode are all located below the semiconductor material wafer or layer.

13. Dial (70, 70A) according to claim 12, **characterised in that** the semiconductor material wafer or layer (44A) has no conductive doped areas in the second portion (54A) of the dial.

14. Dial according to claim 12, **characterised in that** the second portion (54A) of the dial comprises an antenna (80, 80A), which is arranged below the semiconductor material wafer or layer (44A).

15. Dial according to claim 14, **characterised in that** the antenna (80, 80A) is deposited on the same layer (82) as said at least one negative electrode (78, 78A) and said at least one positive electrode (79, 79A).

16. Dial according to claim 15, **characterised in that** the antenna is formed by the same material as said at least one negative electrode (78, 78A) and said at least one positive electrode (79, 79A).

17. Dial according to any one of claims 12 to 16, **characterised in that** the semiconductor material wafer or layer (44A) extends in said general plane over the entire dial.

18. Dial according to any one of claims 12 to 17, **characterised in that** the semiconductor material wafer or layer has a texturing over its entire upper surface.

19. Dial according to any one of claims 12 to 18, **characterised in that** an anti-reflective layer (84) is uniformly deposited on the semiconductor material wafer or layer (44A).

20. Dial according to any one of claims 12 to 19, **characterised in that** it comprises at least one transparent, semi-transparent or translucent layer (60) which is arranged above the semiconductor material wafer or layer (44A) so as to cover it entirely, and which darkens the colour of the dial, in particular anthracite, midnight blue or near-black.

21. Dial according to claim 20, **characterised in that** an upper surface (62) of the transparent, semi-transparent or translucent layer (60) has a finish giving, at least in some areas, a matt, brushed, satin or glossy appearance to the dial.
